# EUROPÄISCHE PATENTSCHRIFT

(11) **EP 0 936 050 B1**
(45) Veröffentlichungstag und Bekanntmachung des Hinweises auf die Patenterteilung: **02.06.2004**
(21) Anmeldenummer: 99100596.8
(22) Anmeldetag: 14.01.1999
(51) Int. Cl.: B29C 47/08, B29C 47/12, B29C 47/56

(54) **Extrusionskopf**
Extrusion head
Tête d'extrusion

(30) Priorität: 29.01.1998 DE 19803269
(43) Veröffentlichungstag der Anmeldung: 18.08.1999
(73) Patentinhaber: ThyssenKrupp Elastomertechnik GmbH, 21079 Hamburg (DE)
(72) Erfinder: Hirschkorn, Ingo, 21629 Neu Wulmstorf (DE)
(74) Vertreter: John, Ernst, Dipl.-Ing.

(56) Entgegenhaltungen:
- US-A- 4 372 736
- US-A- 4 824 353
- US-A- 5 472 332

## Beschreibung

Die Erfindung geht aus von einem Extrusionskopf mit einem feststehenden Kopfteil und je einem oberen und unteren beweglichen Kopfteil und ggf. einem beweglichen Zwischenteil sowie - auf jeder Seite - mindestens einer Spanneinrichtung, die die beweglichen Kopfteile an das feststehende Kopfteil preßt.

Aus der US 4 824 353 ist ein solcher Extrusionskopf bekannt, bei dem am feststehendem Kopfteil angeordnete Spannzylinder - je getrennt - das obere bzw. das untere bewegliche Kopfteil an das feststehende Kopfteil pressen.

Bei sehr breiten Profilöffnungen der Profilleiste im Extrusionskopf werden die durch den Extrusionsdruck hervorgerufenen Kräfte, die die beweglichen Kopfteile auseinander zu drücken versuchen, derart groß, daß es zu Schwierigkeiten bei der Abdichtung des Extrusionskopfes an den Trennfugen zwischen den Kopfteilen kommt, so daß die aufgewendete Energie und das zu extrudierende Material nicht optimal genutzt werden.

Der Erfindung liegt die Aufgabe zugrunde, die beschriebenen Nachteile zu vermeiden und auch bei extremen Drücken und Abmessungen eine sichere Abdichtung sicherzustellen.

Diese Aufgabe wird erfindungsgemäß dadurch gelöst, daß zusätzlich zu der Spanneinrichtung zum Anpressen der beweglichen Kopfteile an das feststehende Kopfteil eine Spanneinrichtung vorgesehen ist, die das obere und das untere bewegliche Kopfteil im betriebsbereiten Zustand jeweils in Richtung auf das andere bewegliche Kopfteil spannt. Dadurch können die flach verlaufenden Trennflächen zwischen den beweglichen Kopfteilen und dem feststehenden Kopfteil und die Trennflächen zwischen den beweglichen Kopfteilen und der Kassette oder Vorformleiste wirksamer aneinander verspannt werden. Dabei ist die Dichtwirkung um so größer, je weiter die Wirk- oder Kraftebene der Spanneinrichtung von einer gedachten Ebene durch die Schwenkachsen der beweglichen Kopfteile entfernt ist.

Nach einer vorteilhaften Weiterbildung der Erfindung ist die zusätzliche Spanneinrichtung für die beweglichen Kopfteile durch Spannzylinder gebildet, die an einem der beweglichen Kopfteile befestigt sind, und mit einem Greifmittel versehen sind, das eine lösbare Verbindung zu dem jeweils anderen beweglichen Kopfteil ermöglicht. Mit dieser Weiterbildung läßt sich die angestrebte Wirkung sicher erreichen.

Damit die zusätzlichen Spannzylinder ein ungehindertes Öffnen der beweglichen Kopfteile ermöglichen, ist weiter vorgesehen, daß die Spannzylinder an dem oberen beweglichen Kopfteil befestigt sind und mit dem Greifmittel das untere beweglichen Kopfteil erfassen.

Eine platzsparende Anordnung wird erreicht, wenn das Greifmittel als um die eigene Achse drehbare Kolbenstange mit hammerförmigem Endstück ausgebildet ist, das zum Erfassen einer entsprechenden Anlagefläche des jeweils anderen beweglichen Kopfteils geeignet ist.

Damit die Spannzylinder an der entscheidenden Stelle - den Trennfugen - wirken können, sind sie bevorzugt in den seitlichen Bereichen des betreffenden beweglichen Kopfteils angeordnet.

Ein Ausführungsbeispiel des Gegenstandes der Erfindung ist in der Zeichnung dargestellt und wird im folgenden näher erläutert.

Es zeigen
- **Fig. 1**: einen erfindungsgemäßen Extrusionskopf mit verriegelten Kopfteilen in einer teilweisen geschnittenen Seitenansicht,
- **Fig. 2**: den Extrusionskopf gemäß Fig. 1 in der Stirnansicht,
- **Fig. 3**: den Extrusionskopf mit noch geschlossenen, aber entriegelten Kopfteilen in einer teilweise geschnittenen Seitenansicht,
- **Fig. 4**: der Extrusionskopf im geöffneten Zustand mit vollständig weg geschwenkten Kopfteilen in einer teilweise geschnittenen Seitenansicht,
- **Fig. 5**: den Extrusionskopf in einer "Computer-Seitenansicht",
- **Fig. 6**: den Extrusionskopf in einem waagerechten auszugsweisen Querschnitt längs der Linie VI-VI in Fig. 1 und
- **Fig. 7**: das untere bewegliche Kopfteil in einer gemäß der Linie VII-VII in Fig. 1 teilweise geschnittenen Draufsicht.

Der Extrusionskopf 1 weist ein feststehendes Kopfteil 2, ein oberes bewegliches Kopfteil 3, ein unteres bewegliches Kopfteil 4 und ein bewegliches Kopfzwischenteil 5 (im folgenden nur kurz als Zwischenteil bezeichnet) auf.

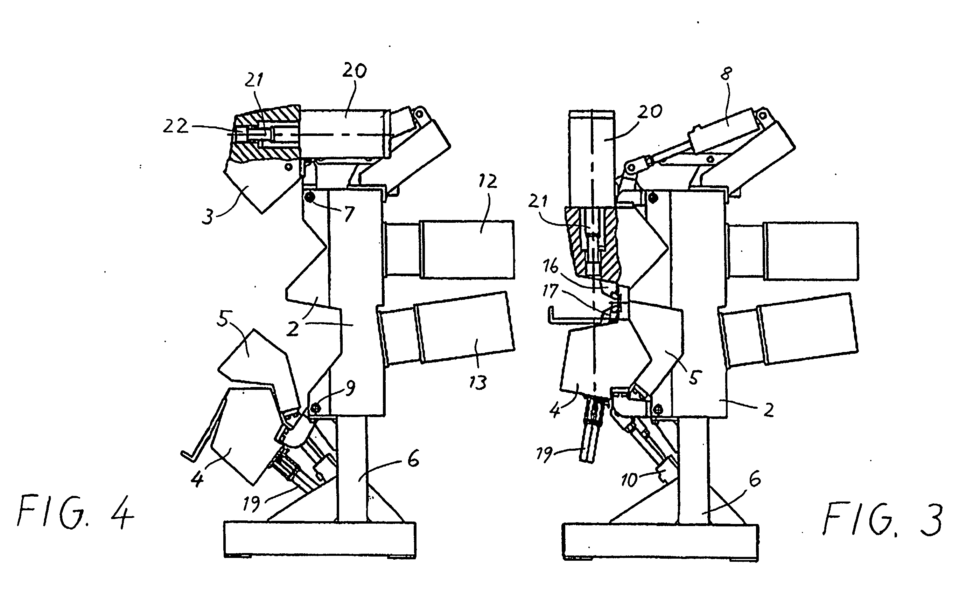

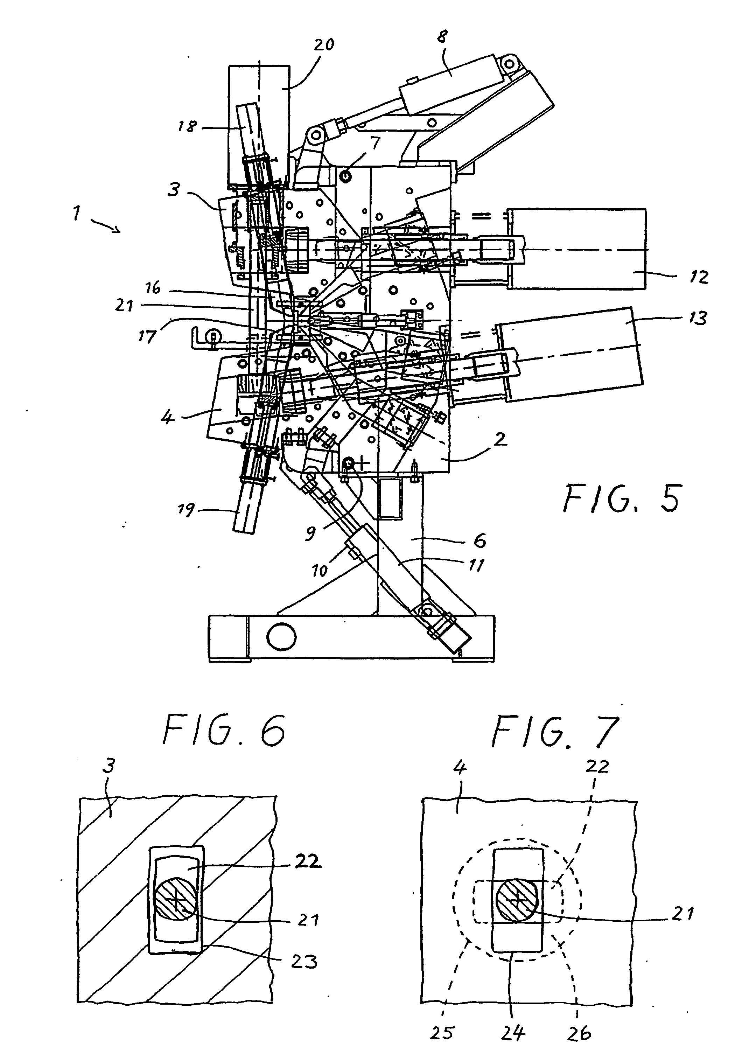

Das feststehende Kopfteil 2 ist auf einer Stütze 6 montiert und mit mindestens einem Extruder verbunden, wie dies beispielsweise in der US 4 824 353 (insbes. Fig. 4 und 5) offenbart ist.

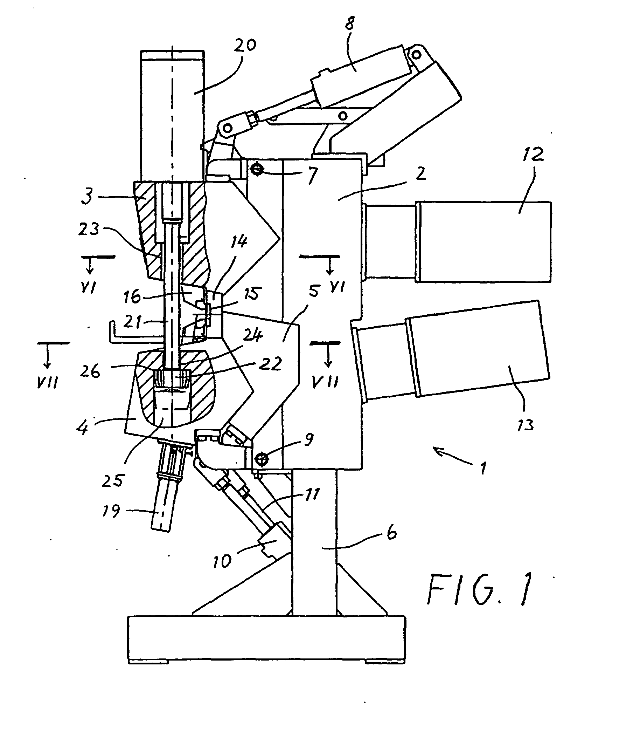

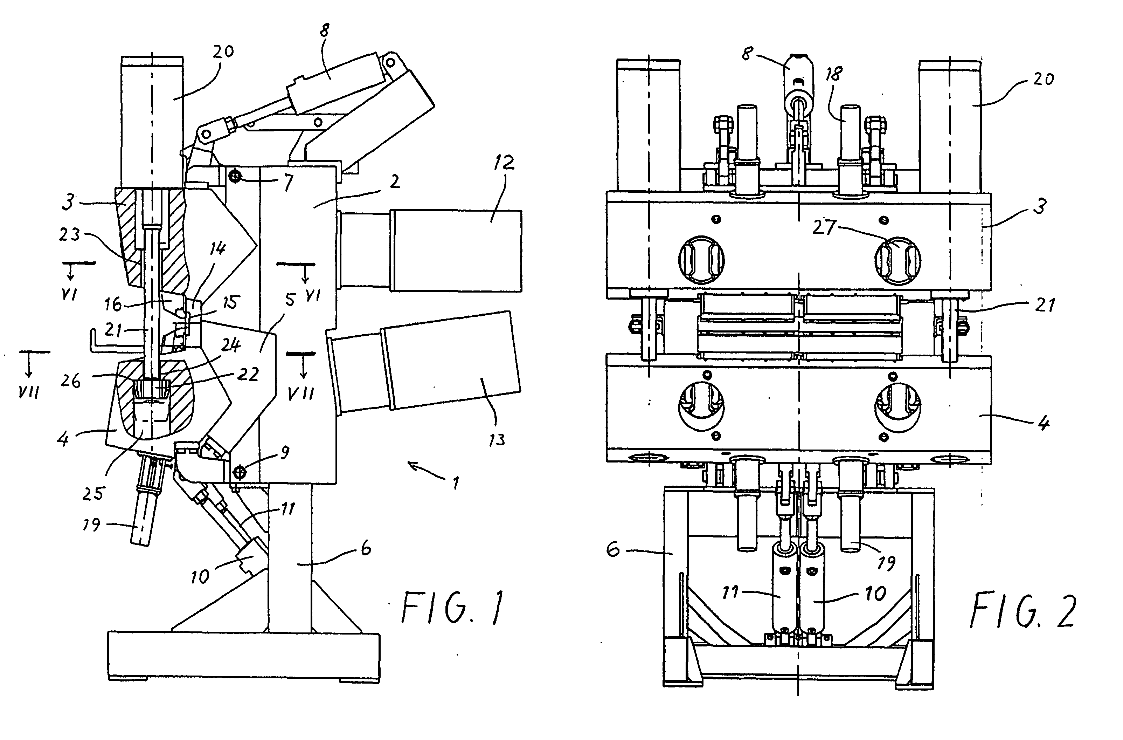

Das obere bewegliche Kopfteil 3 ist um die waagerechte Achse 7 an dem feststehenden Kopfteil 2 angelenkt und kann mit Hilfe eines Bewegungszylinders 8 zur Anlage an das feststehende Kopfteil 2 (Fig. 1, 3) und von diesem weg (Fig. 4) geschwenkt werden.

Desgleichen ist, das untere bewegliche Kopfteil 4 um eine untere waagerechte Achse 9 durch einen weiteren Bewegungszylinder 10 zur Anlage an das feststehende Kopfteil 2 und von diesem weg schwenkbar. Das bewegliche Zwischenteil 5 ist ebenfalls um die Achse 9 schwenkbar und durch einen dritten Bewegungszylinder 11 bewegbar. Die beweglichen Kopfteile 3 und 4 - das Kopfteil 4 unter Zwischenschaltung des Zwischenteils 5 - werden durch im wesentlichen waagerecht angeordnete Spannzylinder 12, 13 an das feststehende Kopfteil 2 gepreßt, wie dies in der bereits erwähnten US 4 824 353 offenbart ist.

Im gemeinsamen Bereich der Kopfteile 2 bis 5 ist eine Kassette 14 mit einer Profilleiste 15 angeordnet. Diese werden durch Klemmkeile 16, 17, die durch Klemmzylinder 18, 19 betätigt werden, in eine entsprechende Ausnehmung des Extrusionskopfes 1 gepreßt.

Zusätzlich weist das obere bewegliche Kopfteil 3 an seiner Oberseite in seinen seitlichen Bereichen zwei weitere Spannzylinder 20 auf. Diese Spannzylinder weisen eine nach unten ausfahrbare, teleskopierbare Kolbenstange 21 mit einem hammerförmigen Endstück 22 auf.

Die beweglichen Kopfteile 3, 4 weisen an ihren im geschlossenen Zustand einander zugewandten Flächen Durchlaßöffnungen 23, 24 für die Endstücke 22 auf, die einen den Endstücken entsprechenden Querschnitt aufweisen. Vom oberen Kopfteil 3 aus betrachtet, schließt sich im unteren Kopfteil 4 an die Duchlaßöffnung 24 eine hinterschnittene Ausnehmung 25 mit im wesentlichen kreisrunden Querschnitt an, die gegenüber der Durchlaßöffnung 24 eine Anlagefläche 26 für das Endstück 22 bildet. Im geöffneten Zustand des Extrusionskopfes (Fig. 4) ist die Kolbenstange 21 der Spannzylinder 20 soweit eingezogen, daß sich das Endstück 22 innerhalb des beweglichen Kopfteils 4 befindet. Auch wenn die Kopfteile 3 bis 5 von den Bewegungszylinder 8, 10, 11 an das feststehende Kopfteil 2 gedrückt werden, befinden sich die Kolbenstangen 21 noch in der zurückgezogenen Position (Fig. 3). Erst wenn die beweglichen Kopfteile 3 bis 5 von den Spannzylindern 12, 13 an das feststehende Kopfteil 2 gepreßt werden, werden die Kolbenstangen 21 nach unten ausgefahren und in das untere Kopfteil 4 eingefahren. Kurz nachdem die hintere Kante des Endstücks 22 die Anlagefläche 26 erreicht hat, wird der Hub der Kolbenstange 21 gestoppt und die Kolbenstangen selbst um 90° um ihre eigene Achse gedreht. Anschließend werden die Kolbenstangen 21 zurückgezogen: Die Endstücke 22 erfassen die Anlageflächen 26 des unteren beweglichen Kopfteils 4 und die Spannzylinder 20 pressen das untere Kopfteil 4 gegen das obere Kopfteil 3.

Die Form der Endstücke 22 ist nicht auf die in den Fig. 6 und 7 dargestellte Form beschränkt. Die Endstücke 22 können vielmehr auch die Form des in Fig. 2 dargestellten Endstücks 27 der Kolbenstange der Spannzylinder 12 haben. Daneben sind aber auch Endstücke mit mehr als zwei Vorsprüngen denkbar.

### Bezugszeichenliste

- **1**: Extrusionskopf
- **2**: feststehendes Kopfteil
- **3**: oberes bewegliches Kopfteil
- **4**: unteres bewegliches Kopfteil
- **5**: bewegliches Kopfzwischenteil, Zwischenteil
- **6**: Stütze
- **7**: waagerechte Achse *für 3 an 2*
- **8**: (*erster*) Bewegungszylinder *für 3*
- **9**: waagerechte Achse *für 4 und 5 an 2*
- **10**: *weiterer* Bewegungszylinder *für 4*
- **11**: *dritter* Bewegungszylinder *für 5*
- **12**: Spannzylinder
- **13**: Spannzylinder
- **14**: Kassette
- **15**: Profilleiste
- **16**: Klemmkeil
- **17**: Klemmkeil
- **18**: Klemmzylinder
- **19**: Klemmzylinder
- **20**: *weitere* Spannzylinder *an 3*
- **21**: telespopierbare Kolbenstange *von 20*
- **22**: hammerförmiges Endstück *an 21*
- **23**: Durchlaßöffnung *in 3 für 22*
- **24**: Durchlaßöffnung *in 4 für 22*
- **25**: hinterschnittene Ausnehmung *in 4*
- **26**: Anlagefläche *in 4 für 22*
- **27**: Endstück

## Patentansprüche

1. Extrusionskopf (1) mit einem feststehenden Kopfteil (2) und je einem oberen und unteren beweglichen Kopfteil (3 bzw. 4) und ggf. einem beweglichen Zwischenteil (5) sowie - auf jeder Seite - mindestens einer Spanneinrichtung (12, 13), die die beweglichen Kopfteile (3, 4, 5) an das feststehende Kopfteil (2) preßt, wobei zusätzlich zu der Spanneinrichtung (12,13) zum Anpressen der beweglichen Kopfteile (3, 4, 5) an das feststehende Kopfteil (2) eine Zusatz-Spanneinrichtung (20) vorgesehen ist, die das obere und das untere bewegliche Kopfteil (3, 4) im betriebsbereiten Zustand jeweils in Richtung auf das andere bewegliche Kopfteil (4 bzw. 3) spannt,
**dadurch gekennzeichnet, daß** die Zusatz-Spanneinrichtung (20) für die beweglichen Kopfteile (3, 4) durch Zussatz-Spannzytinder (20) gebildet ist, die an einem der beweglichen Kopfteile (3) befestigt und mit einem Greifmittel versehen sind, das eine lösbare Verbindung zu dem jeweils anderen beweglichen Kopfteil (4) ermöglicht.

2. Extrusionskopf nach Anspruch 1, **dadurch gekennzeichnet, daß** die Zusatz-Spannzylinder (20) an dem oberen beweglichen Kopfteil (3) befestigt sind und mit dem Greifmittel das untere bewegliche Kopfteil (4) erfassen.

3. Extrusionskopf nach Anspruch 1 oder 2, **dadurch gekennzeichnet, daß** das Greifmittel als um die eigene Achse drehbare Kolbenstange (21) mit hammerförmigem Endstück (22) ausgebildet ist, das zum Erfassen einer entsprechenden Anlagefläche (26) des jeweils anderen beweglichen Kopfteils (4) geeignet ist.

4. Extrusionskopf nach einem der Ansprüche 1 bis 3, **dadurch gekennzeichnet, daß** die Zusatz-Spannzylinder (20) in den seitlichen Bereichen des betreffenden beweglichen Kopfteils (3) angeordnet sind.

## Claims

1. Extrusion head (1) with a fixed head portion (2) and a respective upper and lower movable head portion (3 and 4) and possibly a movable intermediate portion (5) as well as - on each side - at least one clamping device (12, 13), which presses the movable head portions (3, 4, 5) onto the fixed head portion (2), wherein in addition to the clamping device (12, 13) for pressing the movable head portions (3, 4, 5) onto the fixed head portion (2), an additional clamping device (20) is provided, which in the operative state clamps the upper and the lower movable head portion (3, 4) respectively in the direction of the other movable head portion (4 or 3),
**characterised in that** the additional clamping device (20) for the movable head portions (3, 4) is formed by additional clamping cylinders (20), which are fastened to one of the movable head portions (3) and provided with a gripping means, which enables a releasable connection with the respective other movable head portion (4).

2. Extrusion head according to Claim 1, **characterised in that** the additional clamping cylinders (20) are fastened to the upper movable head portion (3) and grasp the lower movable head portion (4) with the gripping means.

3. Extrusion head according to Claim 1 or 2, **characterised in that** the gripping means is configured as a piston rod (21) rotatable around its own axis with a hammer-shaped end piece (22), which is suitable for grasping an appropriate abutment face (26) of the respective other movable head portion (4).

4. Extrusion head according to one of Claims 1 to 3, **characterised in that** the additional clamping cylinders (20) are disposed in the lateral regions of the respective movable head portion (3).

## Revendications

1. Tête d'extrusion (1) avec une partie de tête fixe (2) et respectivement des parties de tête mobiles supérieure et inférieure (3 respectivement 4) et le cas échéant une partie intermédiaire mobile (5) ainsi que, de chaque côté, au moins une installation de serrage (12, 13) qui presse les parties de tête mobiles (3, 4, 5) à la partie de tête fixe (2), où est prévue additionnellement à l'installation de serrage (12, 13) pour presser les parties de tête mobiles (3, 4, 5) à la partie de tête fixe (2) une installation de serrage additionnelle (20) qui serre les parties de tête mobiles supérieure et inférieure (3, 4), à l'état prêt pour le fonctionnement, respectivement en direction de l'autre partie de tête mobile (4 respectivement 3),
**caractérisée en ce que** l'installation de serrage additionnelle (20) pour les parties de tête mobiles (3, 4) est formée par des cylindres de serrage additionnels (20) qui sont fixés à l'une des parties de tête mobiles (3) et sont pourvus d'un moyen de préhension qui permet une liaison relâchable respectivement à l'autre tête mobile (4).

2. Tête d'extrusion selon la revendication 1, **caractérisée en ce que** les cylindres de serrage additionnels (20) sont fixés à la partie de tête supérieure mobile (3) et saisissent avec le moyen de préhension la partie de tête inférieure mobile (4).

3. Tête d'extrusion selon la revendication 1 ou 2, **caractérisée en ce que** le moyen de préhension est réalisé sous forme de tige de piston (21) apte à tourner autour de son propre axe, avec une pièce d'extrémité (22) en forme de marteau qui convient pour saisir une face d'application correspondante (26) respectivement de l'autre partie de tête mobile (4).

4. Tête d'extrusion selon l'une des revendications 1 à 3, **caractérisée en ce que** les cylindres de serrage additionnels (20) sont disposés dans les zones latérales de la partie de tête mobile concernée (3).
